# EUROPÄISCHE PATENTSCHRIFT

(11) **EP 2 582 600 B1**
(45) Veröffentlichungstag und Bekanntmachung des Hinweises auf die Patenterteilung: **27.08.2014**
(21) Anmeldenummer: 11726653.6
(22) Anmeldetag: 10.06.2011
(51) Int. Cl.: B65G 21/18, B65G 21/20

(54) **WENDELFÖRDERER**
SPIRAL CONVEYOR
TRANSPORTEUR HÉLICOÏDAL

(30) Priorität: 17.06.2010 CH 978102010
(43) Veröffentlichungstag der Anmeldung: 24.04.2013
(73) Patentinhaber: WRH Walter Reist Holding AG, 8272 Ermatingen (CH)
(72) Erfinder: DE ANGELIS, Marco, CH-8047 Zürich (CH)
(74) Vertreter: Frei Patent Attorneys
(86) Internationale Anmeldenummer: PCT/CH2011/000141
(87) Internationale Veröffentlichungsnummer: WO 2011/156927

(56) Entgegenhaltungen:
- EP-A1- 1 340 698
- WO-A1-2009/036580
- DE-C1- 3 726 059

## Beschreibung

Die Erfindung bezieht sich auf das Gebiet der Fördertechnik. Sie bezieht sich insbesondere auf einen Wendelförderer sowie auf eine Umlenkvorrichtung gemäss dem Oberbegriff der entsprechenden unabhängigen Patentansprüche.

### STAND DER TECHNIK

Stück- oder auch Schüttgut kann in Fördersystemen mit Bändern oder Mattenketten gefördert werden. Um vertikale Distanzen zu überwinden, oder um Speicherstrecken, Pufferstrecken oder Verzögerungsstrecken im Fördersystem zu realisieren, werden Wendelförderer eingesetzt. In Wendelförderern, oder allgemein bei der Umlenkung von gezogenen Förderbändern, insbesondere in sich elastische Bänder, kurvengängigen Mattenketten, Gliederbandketten, Plattenketten und Scharnierbandketten (im Folgenden zusammenfassend als Fördermittel bezeichnet), entstehen aber grosse Reibungsverluste. Daher wird es als nicht möglich angesehen, solche Förderbänder respektive Förderketten um einen Umlenkwinkel von mehr als 180° zu ziehen. Deshalb werden Antriebe von Wendelförderern so ausgestaltet, dass Antriebskräfte an mehreren Stellen entlang des Umlenkwinkels eingeleitet werden. Zu Reduktion von Reibungskräften ist es beispielsweise aus der WO 99/35063 bekannt, fest montierte Rollen in einem Umlenkbereich anzuordnen.

WO 2009/036580A1 offenbart eine Umlenkvorrichtung als selbständige Baueinheit, welche als selbständige Baueinheit zur Umlenkung oder zur Abstützung bei einer Richtungsänderung eines Fördermittels in einem Fördersystem einbaubar ist. Ein Rollenkörper mit mehreren Rollen rollt dabei um einen Zentralkörper der Umlenkvorrichtung ab. Zur Verwendung bei der Umlenkung um verschieden grosse Winkel ist vorgesehen, den Zentralkörper im Baukastensystem aus mehreren Sektorelementen zusammenzusetzen, und dann einen entsprechend kürzeren oder längenen Rollkörper um den Zentralkörper anzuordnen. Alternativ kann der Zentralkörper, zur Realisierung verschiedener Umlenkwinkel, aus einem flexiblen Material gebildet sein. Bei der Verwendung in Wendelförderern ist vorgesehen, dass der Rollenkörper längs einer Förderbandes entlang einer Spirale aufsteigt und anschliessend wieder zurückgeführt wird. Das Dokument WO 2009/036580 A1 offenbart einer Wendelförderer nach dem Oberbegriff des Anspruchs 1.

WO 2009/036581 A1 beschreibt ebenfalls eine Umlenkvorrichtung, wobei der Zentralkörper in seiner Form verstellbar ist, um unterschiedliche Krümmungsradien oder unterschiedliche Umlenkwinkel zu realisieren..

EP 1 340 698 A1 offenbart eine Führung für ein Fördersystem, mit einem verformbaren Trägerelement ähnlich einer Profilstange, und darin eingesetzten Rollen. Die Rollen sind einer leiterartigen Halterung eingesetzt und können zusammen mit dieser Halterung in das Trägerelement eingeschoben werden. Die Führung ist transversal zu der Ausrichtung der Rollenachsen flexibel.
DE 37 26 059 C1 zeigt eine Förderkurve zur Umlenkung eines Kettenkratzförderers in der Ebene. Bei der Umlenkung des Förderers läuft eine Rollenkette mit dem Förderer mit und verläuft entlang einer Umlenkschiene.

### DARSTELLUNG DER ERFINDUNG

Es ist Aufgabe der Erfindung, einen verbesserten Wendelförderer mit Umlenkvorrichtung für ein Fördersystem der eingangs genannten Art zu schaffen, welche die oben genannten Nachteile behebt, sowie eine Umlenkvorrichtung welche für die Verwendung in einem Wendelförderer geeignet und einfach herzustellen ist.

Diese Aufgabe lösen ein Wendelförderer sowie eine Umlenkvorrichtung gemäss den entsprechenden unabhängigen Patentansprüchen.

Der erfindungsgemässe Wendelförderer weist also ein entlang eines schraubenartig (beispielsweise entlang einer Helix) verlaufenden Wendelbereiches gefördertes Fördermittel auf, wobei das Fördermittel entlang des Wendelbereiches an seiner Innenseite seitlich, in radialer Richtung der Wendel, abgestützt ist. Dabei ist diese Abstützung durch mehrere einzelne entlang der radial belasteten Seite des Fördermittels angeordnete Umlenkvorrichtungen realisiert ist, wobei diese Umlenkvorrichtungen jeweils einen Zentralkörper mit einem darum umlaufenden Rollenkörper mit einer Vielzahl von Rollen aufweisen, und die Rollen in einem Winkelsegment eines schraubenartig verlaufenden Stützbereiches des Wendelförderers auf einer Rollenbahn des Zentralkörpers abrollen. Eine Umlaufbahn der Rollen um den Zentralkörper ist dabei vorzugsweise geschlossen und weist eine (entlang der Umlaufbahn) variierende Krümmung auf.

Die einzelnen Umlenkvorrichtungen sind in einer ersten bevorzugten Ausführungsform der Erfindung entlang der Innenseite des Fördermittels nacheinander angeordnet. Die Innenseite des Fördermittels ist jene Seite, die der Innenseite oder der zentralen Achse des Wendelbereiches zugewandt ist. Dies ist die radial belastete Seite, wenn das Fördermittel um die Wendel gezogen wird. Es können umgekehrt auch Umlenkvorrichtungen entlang der Aussenseite des Wendelbereiches angeordnet sein. Dies ist die radial belastete Seite wenn das Fördermittel gestossen wird.

Mit einer derartigen Abstützung des Fördermittels können erstaunlich grosse Umlenkwinkel realisiert werden. Entgegen der gängigen Ansicht können Umlenkwinkel um eine ganze Windung, also von 360° oder mehr realisiert werden, wobei das Fördermittel lediglich durch einen Antrieb durch den Wendelbereich gezogen wird, oder, in einer anderen bevorzugten Ausführungsform der Erfindung, gestossen wird, oder hin- und herbewegt wird. Es ist also vorzugsweise kein Antrieb erforderlich, der an weiteren Bereichen des Wendelbereiches am Fördermittel angreift. Es sind damit auch Umlenkwinkel um zwei, drei oder mehr Windungen realisierbar.

In einer bevorzugten Ausführungsform der Erfindung ist der Zentralkörper flexibel, und vorzugsweise elastisch. Dadurch kann er in einer ebenen Form hergestellt und mit dem Rollenkörper bestückt werden. Die Bahn des Rollenkörpers um den Zentralkörper verläuft bei der Herstellung der Umlenkvorrichtung also auch in einer Ebene. Bei der Montage kann die Umlenkvorrichtung in die gewünschte Form entlang der Schraubenlinie der Wendel elastisch verformt, insbesondere tordiert werden. Sie bleibt dann so im verformten Zustand am Wendelförderer befestigt. Die Zentralkörper der Umlenkvorrichtungen sind also im Wendelförderer tordiert. Beim Demontieren wird eine elastische Umlenkvorrichtung wieder in die ebene Ursprungsform zurückfedern. Damit ist eine einfache Herstellung und eine einfacher Einsatz von Umlenkvorrichtungen möglich; es müssen keine komplizierten Schraubenformen - angepasst an die genaue Form des jeweiligen Wendelförderers - fiir den Zentralkörper berechnet und hergestellt werden. Ein solcherart flexibler Zentralkörper lässt sich auch unabhängig von einem Wendelförderer einsetzen.

Es ist in einer andere bevorzugten Ausführungsform der Erfindung vorgesehen, dass die Umlenkvorrichtungen nicht tordiert sind. Diese Umlenkvorrichtungen sind aber ebenfalls dem Verlauf des Fördermittels schraubenartig folgend nacheinander angeordnet.

Die Form einer einzelnen Umlenkvorrichtung wird im Wesentlichen durch die Form des Zentralkörpers definiert, und entspricht einem frei wählbaren Umlenkwinkel. Der Umlenkwinkel beträgt beispielsweise zwischen 20 Grad und 200 Grad. Zur Bildung von Modulen eines Wendelförderers beträgt der Umlenkwinkel vorzugsweise 45°, 60° oder 90°. Entlang dieses Umlenkwinkels, oder, mit anderen Worten, in einem Abrollbereich, wird das Fördermittel durch den Rollenkörper der Umlenkvorrichtung gestützt respektive rollt das Fördermittel am Rollenkörper ab. Vorzugsweise verläuft die Rückführung des Rollenkörpers ausserhalb des Abrollbereiches auf dem kürzesten Wege, oder aber in einer gekrümmten und in etwa zum Abrollbereich parallelen Bahn.

Der detaillierte Aufbau einer Umlenkvorrichtung ist in einer bevorzugten Ausführungsform der Erfindung so wie in der eingangs zitierten WO 2009/036580 A1 oder der WO 2009/036581 A1 gestaltet.

In einer bevorzugten Ausführungsform der Erfindung sind die Rollen mit einem Rollenabstandsmittel, insbesondere in einem Rollenband, geführt und voneinander beabstandet.

Vorzugsweise ist das Rollenband aus einem flexiblen Flachmaterial gefertigt, insbesondere aus einem Gewebeband oder kunststoffdurchsetzten Gewebe. Weitere bevorzugte einsetzbare Ausführungsformen von Rollenbändern sind in der WO 2006/094423 offenbart, insbesondere in den Figuren 8 bis 18 und dem entsprechenden Abschnitten der Beschreibung, deren Inhalt hiermit in seiner Gesamtheit durch Verweis aufgenommen ist. Beispielsweise kann ein Rollenband zwischen den Halterungen der Rollen auch eine vorzugsweise mittige Einschnürung aufweisen, so dass das Rollenband auch um eine Achse senkrecht zur Ebene des Rollenbandes biegbar ist.

In einer bevorzugten Ausführungsform der Erfindung verläuft das Rollenband mit seinen beiden äusseren Kanten in einer Bandführungsnut des Zentralkörpers und ist dadurch geführt und am Herausfallen gehindert. Die Bandführungsnut ist vorzugsweise in einem Teil des Zentralkörpers geformt und bildet im Prinzip einen um den Zentralkörper umlaufenden Schlitz, wobei aber der Rollenkörper in einzelnen Bereichen der Umlaufbahn frei, also nicht in der Bandführungsnut verlaufen kann.

In weiteren bevorzugten Ausführungsformen der Erfindung ist der Rollenkörper aus einer Vielzahl von einzelnen, nicht aneinander geketteten Rollen gebildet. Die Rollen sind um den Zentralkörper rollend angeordnet und können durch Distanzierungskörper voneinander beabstandet sein. Solche Distanzierungskörper sind drehbar auf den Achsen der Rollen gelagert, vorzugsweise an beiden Enden der Rollen, neben einem abrollenden Teil der Rollen, und verhindern, dass die drehenden Rollen einander berühren.

Die Erfindung erlaubt den Einsatz von verbesserten und vereinfachten Wendelförderern, indem der Antrieb respektive die Krafteinleitung zur Bewegung des Fördermittels wesentlich vereinfacht wird: ein einzelner Antriebsmotor kann das Fördermittel um einen oder mehrere Umdrehungen nach oben oder nach unten ziehen oder stossen, oder hin und her bewegen. Anwendungen sind beispielsweise Vertikalförderer zur Überwindung vertikaler Distanzen, in denen sich eine Wendel von einer Förderebene auf eine andere Förderebene hochschraubt (oder umgekehrt). Andere Anwendungen sind Speicherstrecken oder Pufferstrecken oder Verzögerungsstrecken im Fördersystem. Die geometrische Anordnung von Wendeln des Wendelförderers umfasst nebst einer einfachen Wendel (Schraube) auch ineinander angeordnete Schrauben unterschiedlichen Durchmessers, eine Doppelhelix, nebeneinander angeordnete Schrauben. Eine solche Schraube oder Wendel kann auch einen entlang der Bahn des Fördermittels variierenden Radius, entsprechend einer Spirale, und/oder eine variierende Steigung aufweisen. In einer Speicherstrecke oder Pufferstrecke wird beispielsweise das Fördermittel mit dem Fördergut zuerst in einer Wendel nach oben und in einer anderen nach unten geführt. Dies kann auch durch mehrere Wendeln wiederholt geschehen. Ferner kann in einer Speicherstrecke eine Rückführ-Umlenkung vorliegen, welche das Fördergut auf den Rückweg aus den Speicher hinaus umlenkt, bevor die Position der Rückführ-Umlenkung im Speicher verstellbar ist, wodurch also die Länge und die Kapazität des Speichers, und damit auch die Verweildauer des Fördergutes im Speicher, variiert werden kann. Ganz allgemein kann ein Speicher als "first in - first out" oder als "first in - last out" ausgebildet sein.

Eine Umlenkvorrichtung, welche insbesondere zur Verwendung in einem Wendelförderer geeignet ist, aber auch für andere Anwendungen ohne Bezug zu Wendelförderern eingesetzt werden kann, ist durch plastische Verformung einer vorzugsweise metallischen Profilstange geformt. Die Profilstange weist über ihre Länge ein im wesentlichen gleich bleibendes Querschnittsprofil auf, was aber nicht aussschliesst, dass beispielsweise Befestigungslöcher oder -Schlitze an verschiedenen Stellen der Stange vorliegen können. Das Profil kann, im Querschnitt gesehen, offen oder geschlossen sein. Auch nach dem Verformen der Stange ist das Querschnittsprofil, entlang der verformten Stange gesehen, im Wesentlichen gleich bleibend.

Es kann der ganze Zentralkörper aus einer solchen Profitstange geformt sein, oder nur ein Teilprofil, wobei ein zweites Teilprofil aus einem anderen Material, beispielsweise Kunststoff besteht. Andere Materialien, aus denen das ganze Profil oder ein Teilprofil bestehen kann sind nebst Metallen und Kunststoffen auch Verbundmaterialien (z.B. glasfaser- oder kohlefaserbasiert), keramische Materialien, Holz, Bambus, etc. und Kombinationen derselben.

Die Teilprofile können ohne separate weitere Teile als Verbindungselemente miteinander verbunden sein, beispielsweise durch Schnappverbindungen, Verzahnen, Löten, Schweissen, Aufschrumpfen. Alternativ können separate Verbindungselemente zur Verbindung der Profile vorliegen, beispielsweise Stifte, Schrauben, Klammern, Klebstoff, etc. Teilprofile können zusammengefügt und dann gemeinsam verformt werden, oder aber zuerst einzeln verformt und erst dann zusammengefügt.

Zur Herstellung einer verzahnten Umlenkvorrichtung werden die Profile ineinander geschoben und gemeinsam verformt, insbesondere gebogen und/oder tordiert. Allgemein werden vorzugsweise, wenn die Teilprofile gemeinsam verformt werden, die Enden des so gebildeten Zentralkörpers sauber abgelängt und mit Umlenkelementen oder Endelementen versehen, welche die Rollen von einer vorlaufenden Bahn auf eine rücklaufende Bahn und umgekehrt führen. Das Profil oder die Teilprofile lassen sich somit quasi endlos durch Stranggussverfahren oder Kunststoff-Extrusionsverfahren herstellen. Bei der Herstellung einer Umlenkvorrichtung mit bestimmten vorgegebenen Dimensionen (Länge, Krümmung) kann dies auf einfache Weise, ausgehend von jeweils denselben geraden Standardprofilen geschehen. Es ist keine Herstellung von komplizierten Spezialgeometrien notwendig, und es müssen keine solchen Teile mit unterschiedlichen Längen und Radien gelagert werden.

In einer bevorzugten Ausführungsform der Erfindung weist die Umlenkvorrichtung einen ersten Bereich mit konstanter Krümmung auf, und beidseits an diesen anschliessende Übergangsbereiche. Dabei nimmt jeweils von den Enden der Umlenkvorrichtung her gesehen die Krümmung der Umlenkvorrichtung respektive des Zentralkörpers in den Übergangsbereichen stetig von Null aus bis zur Krümmung des ersten Bereiches hin zu. Damit ist ein ruckfreies Einfahren des Fördermittels in die Kurve einer Wendel oder allgemein einer Umlenkung innerhalb der Ebene möglich.

In einer weiteren bevorzugten Ausführungsform der Erfindung liegt ein ausserhalb des Rollenkörpers um den Zentralkörper umlaufendes Schutzmittel vor, welches im Bereich einer vorderen Rollenbahn, wo das Fördermittel abgestützt wird, zwischen dem Fördermittel und den Rollen verläuft. Das Schutzmittel ist beispielsweise ein flexibles Band oder eine Gliederkette. Das Schutzmittel kann zudem korrespondierend zur Form des Fördermittels geformt sein, beispielsweise mit einer Aussparung entsprechend der Dicke des Fördermittels. Damit wirkt es als Adaptionselement: es kann damit eine Umlenkvorrichtung an eine Form unterschiedlicher Fördermittel angepasst werden, indem unterschiedliche Adaptionselemente eingesetzt werden, ohne dass der Rest der Umlenkvorrichtung angepasst werden muss.

Zusammenfassend gesagt ist also vorzugsweise die Umlenkvorrichtung als Ganzes elastisch verformbar, so dass flache Umlenkvorrichtungen an eine Wendelform oder eine andere nichtflache Form angepasst werden können, und ist der Zentralkörper plastisch verformbar, so dass Umlenkvorrichtungen in einfacher Weise aus Standardprofilen herstellbar sind.

Gemäss weiteren bevorzugten Ausführungsformen der Erfindung liegt ein entlang der Wendel und zwischen Fördermittel und Rollenkörper verlaufendes Antriebsmittel vor, welches eine Antriebskraft auf das Fördermittel überträgt. Das Antriebsmittel ist beispielsweise ein Antriebsband.

In einer bevorzugten Ausführungsform der Erfindung weist das Antriebsmittel eine erste Verzahnung auf, welche im Wendelbereich, das heisst, in einem Bereich, in welchem das Antriebsmittel einer Schraubenlinie der Wendel folgt, in eine zweite Verzahnung des Fördermittels eingreift und dadurch die Antriebskraft überträgt.

In einer bevorzugten Ausführungsform der Erfindung ist das Antriebsmittel ausserhalb eines schraubenförmigen Abschnittes der Wendel, in welchem es die Antriebskraft auf das Fördermittel überträgt, durch einen Rückführ-Abschnitt des Antriebsmittels, welcher nicht entlang der Schraubenlinie der Wendel verläuft, zurückgeführt. Vorzugsweise verläuft der Rückführ-Abschnitt auch nicht entlang einer Rückführung des Fördermittels. Dieser Rückführ-Abschnitt kann im wesentlichen gerade verlaufen, vorzugsweise in etwa entlang der Richtung der Achse der Wendel resp. der Schraubenlinie. Der Abschnitt der Wendel, entlang welchem das Antriebsmittel die Antriebskraft auf das Fördermittel überträgt, umfasst vorzugsweise mehr als 270° oder 360°.

In einer weiteren bevorzugten Ausführungsform der Erfindung ist das Antriebsmittel an einer oder mehreren Stellen des Wendelbereichs entlang der Schraubenlinie der Wendel durch eine Vorrichtung zur Krafteinleitung angetrieben. Beispielsweise umschlingt es dazu ein Mittel zur Krafteinleitung, typischerweise ein Rad oder ein Zahnrad.

In einer weiteren bevorzugten Ausführungsform der Erfindung sind das Antriebsmittel und die Fördermittel beide angetrieben, entweder durch separate Antriebe, oder durch denselben Antrieb.

In weiteren Ausführungsformen dieses weiteren Aspektes der Erfindung weist ein Wendelförderer sowohl einen Rollenkörper als auch ein Antriebsmittel oder Antriebsband auf, welche nicht entlang der Schraubenlinie der Wendel zurückgeführt sind. Das Antriebsmittel und der Rollenkörper können bei dieser Rückführung zusammen, d.h. nebeneinander oder parallel geführt sein, oder nicht zusammen. Die verschiedenen Ausführungsförmen mit einem Adaptionselement als Antriebsmittel, insbesondere einem Antriebsband, sind auch hiermit kombinierbar.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Wendelförderer;
- Figuren 2 und 3: Ansichten einer Umlenkvorrichtung für ein Fördermittel;
- Figur 4 bis 6: eine bevorzugte Ausführungsform einer Umlenkvorrichtung;
- Figuren 7 bis 11: eine weitere bevorzugte Ausführungsform einer Umlenkvorrichtung;
- Figur 12: eine Umlenkvorrichtung mit variierendem Radius;
- Figur 13: eine Umlenkvorrichtung mit einem umlaufenden Schutzmittel als Adaptionselement;
- Figur 14: einen Wendelförderer mit einem entlang der Wendel verlaufenden Antriebsband als Adaptionselement;
- Figur 15: einen Querschnitt durch ein Führungsprofil desselben;
- Figur 16: eine Verzahnung von Antriebsband und Elementen des Fördermittels;
- Figur 17: eine Variante des Wendelförderers mit Antriebsband;
- Figur 18: einen Wendelförderer mit einem entlang der Wendel verlaufenden Rollenkörper; und
- Figur 19: einen Querschnitt durch eine Führungsschiene desselben.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

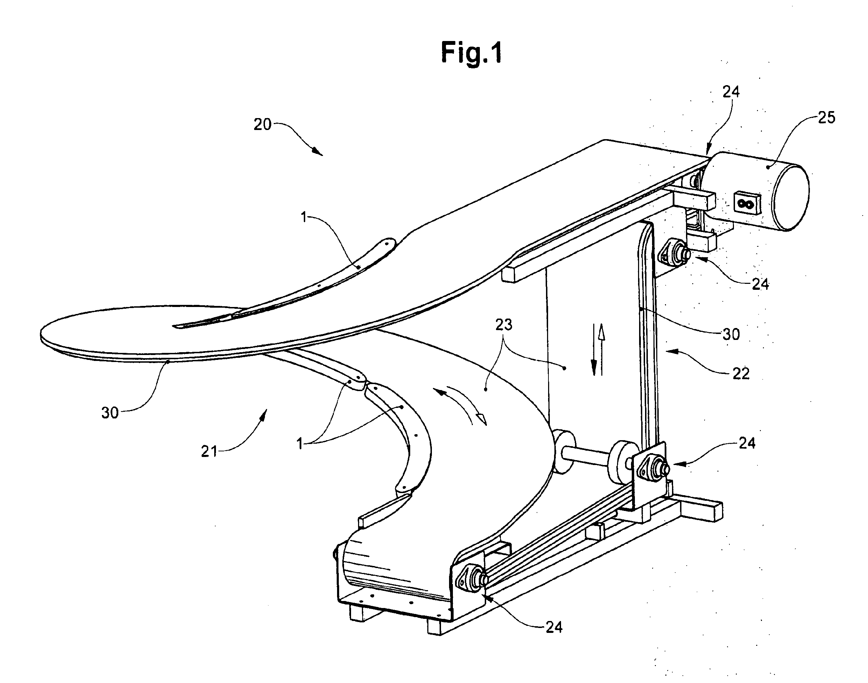

**Figuren 1** zeigt einen Wendelförderer 20. Darin ist ein endlos umlaufendes Fördermittel 23, beispielsweise eine Förderkette wie eine Mattenkette, Gliederbandkette, Plattenkette oder eine Scharnierbandkette, entlang eines Wendelbereiches 21 gefördert angeordnet. Der Wendelbereich 21 führt das Fördermittel 23 aus einer Grundebene heraus in eine höher gelegene Ebene, von wo aus es wieder durch einen vertikal verlaufenden Rückführbereich 22 nach unten in die Grundebene und schliesslich zurück an den Anfang des Wendelbereiches 21 geführt wird. Dabei wird das Fördermittel 23 an mehreren Stellen durch vertikale Umlenkungen 24 umgelenkt. Diese weisen jeweils eine Umlenkachse auf, welche im wesentlichen senkrecht zu einer Achse des Wendelbereiches 21 und senkrecht zur Förderrichtung des Fördermittel 23 im Bereich der jeweiligen vertikalen Umlenkung 24 verläuft. Das Fördermittel 23 wird durch einen Antrieb 25 im oberen Bereich des Wendelbereiches 21 durch den Wendelbereich 21 gezogen. In einer alternativen Ausführungsform der Erfindung ist der Antrieb 25 im unteren Bereich angeordnet, oder es liegen mehrere Antriebe vor. Der Wendelförderer 20 weist ferner Stütz- oder Rahmenelemente auf, die aber nicht dargestellt sind. Das Fördermittel 23 ist in vertikaler Richtung im Bereich der Umlenkvorrichtungen 1 vorzugsweise durch diese selber gestützt, und in anderen Bereichen durch Gleitschienen 30 als weitere Führungsmittel. Diese sind insbesondere in Bereichen, welche den Umlenkvorrichtung 1 bezüglich des Fördermittels 23 gegenüber liegen zweckmässig, indem sie beispielsweise ein Hochziehen des Fördermittels 23 an der äusseren Peripherie der Wendel verhindern.

Zur seitlichen oder radialen Abstützung des Fördermittels 23 im Wendelbereich 21 sind mehrere Umlenkvorrichtungen 1 angeordnet. Diese sind als modulare Elemente und separate Bau- und Montageeinheiten als Einheit montierbar, demontierbar und transportierbar. Sie bilden, nacheinander anschliessend angeordnet, eine schraubenförmig verlaufende radiale Abstützung. "Radial" ist in Bezug auf die Wendelform respektive Schraubenform zu verstehen, also im Wesentlichen die Achse der Wendel schneidend und senkrecht zur Achse der Wendel verlaufend.

Die vertikale Abstützung des Fördermittels 23 im Wendelbereich 21 wie auch in den anderen Bereichen kann durch Gleitschienen oder ebenfalls durch Stützelemente mit umlaufenden Rollen geschehen. Eine vertikale Abstützung kann unter anderem dazu eingerichtet sein, das Fördermittel 23 gegen eine Bewegung nach oben, hervorgerufen beispielsweise durch den Zug des Antriebs, zu halten.

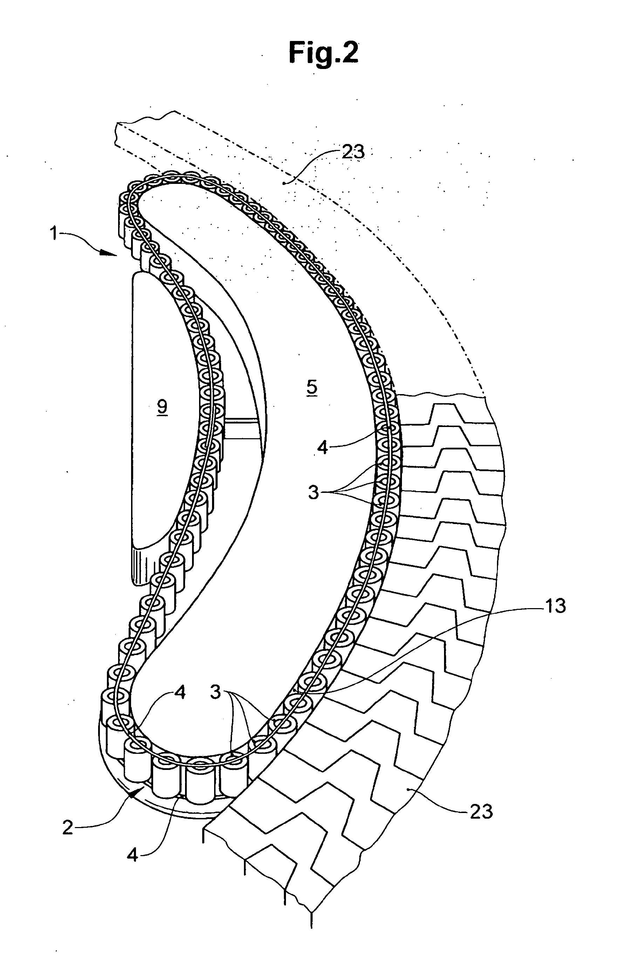

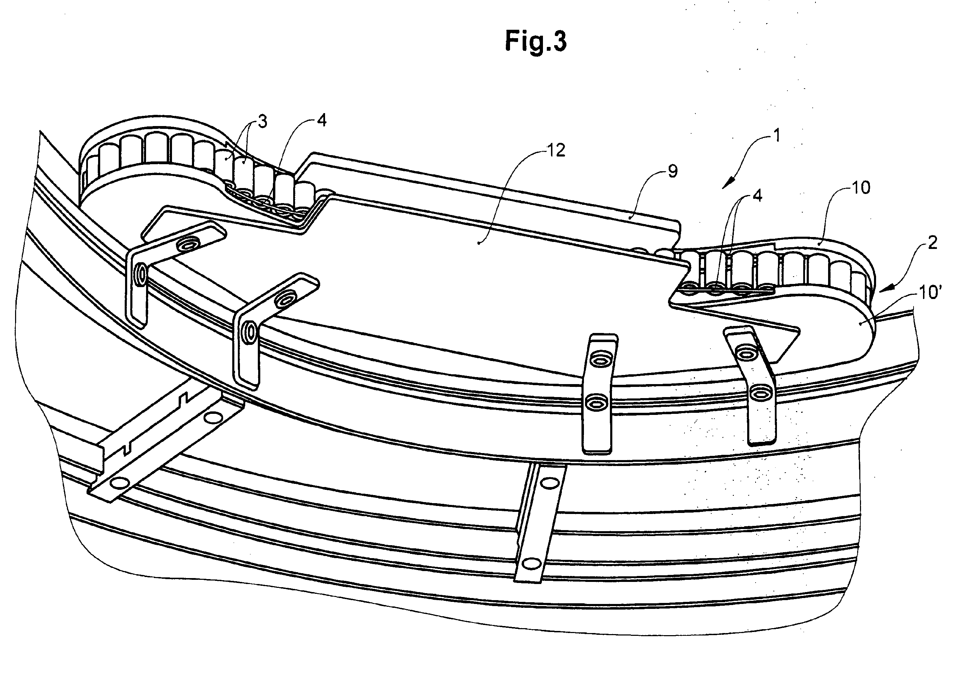

**Figuren 2** und **3** zeigen Ansichten einer Umlenkvorrichtung 1 für ein Fördermittel 23. Die Umlenkvorrichtung 1 weist einen Zentralkörper 5 auf, um welchen umlaufend ein Rollenkörper 2 angeordnet ist. Der Rollenkörper 2 verläuft in einem Abrollbereich zwischen dem Zentralkörper 5 und dem Fördermittel 23 und rollt bei einer Bewegung des Fördermittel 23 an einer Rollenbahn 13 des Zentralkörpers 5 ab. Dabei überträgt der Rollenkörper 2 mit seinen Rollen 3 Druckkräfte senkrecht zur Rollenbahn 13. Dadurch werden die Kräfte, die zur Richtungsänderung des Fördermittels 23 erforderlich sind, mit minimaler Reibung aufgenommen. Die einzelnen Rollen 3 sind in einem umlaufenden Rollenabstandsmittel, hier einem Rollenband 4 gelagert, wie beispielsweise in der WO 2009/036580A1 beschrieben. Das Rollenband 4 ist in der **Figur 2** nur schematisch durch seine Ober- und Unterseite dargestellt. Die Führung des Rollenbandes 4 oder allgemein der Rollen 3 ist durch umlaufende Bandführungsnuten 11 im Zentralkörper 5 realisiert, insbesondere in jeweils einem oberen und dem unteren Bandführungskörper 10, 10', wie sie im Folgenden beschrieben sind.

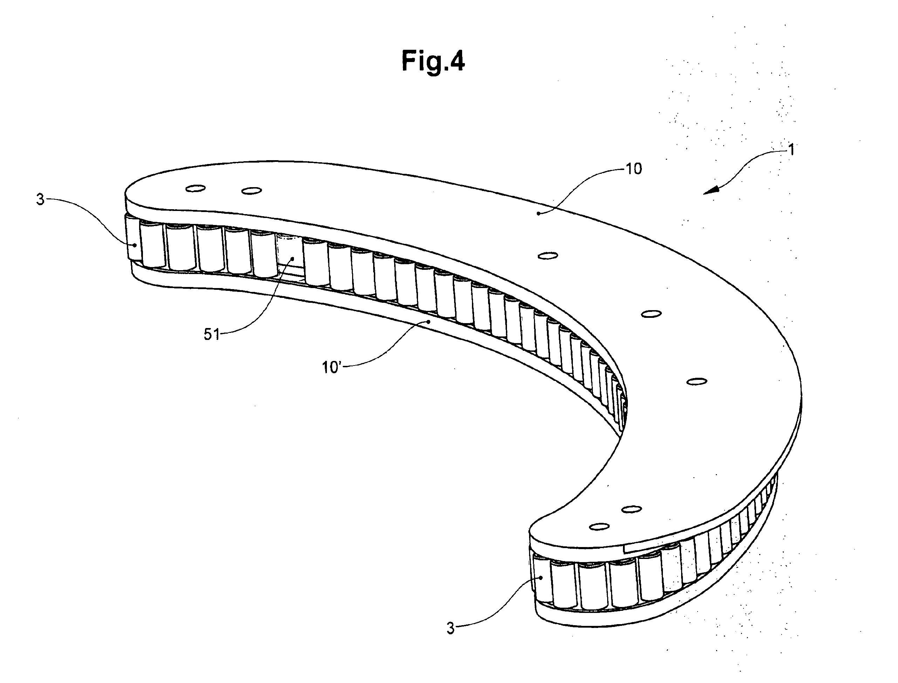

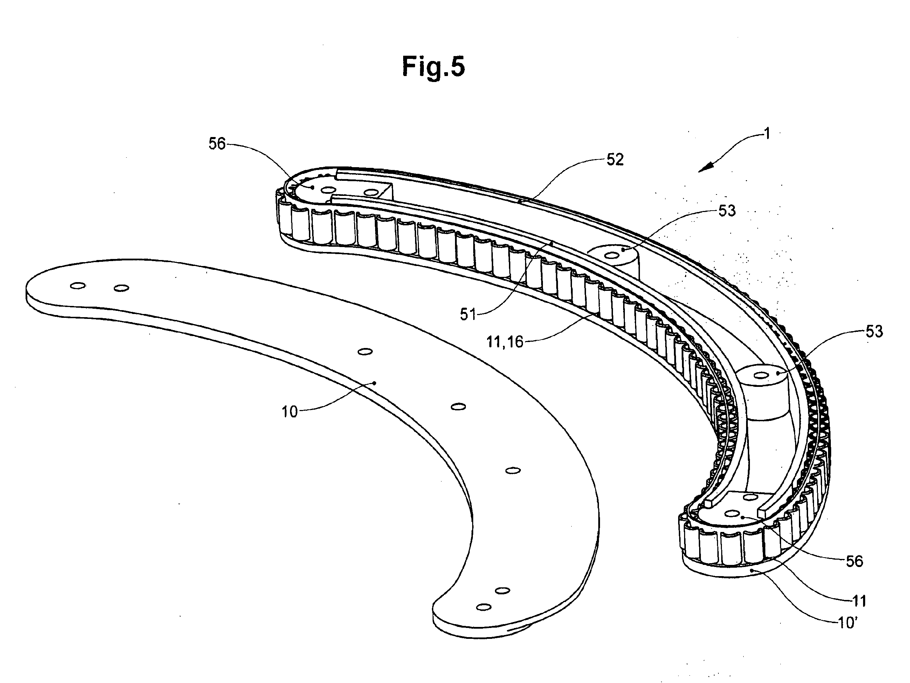

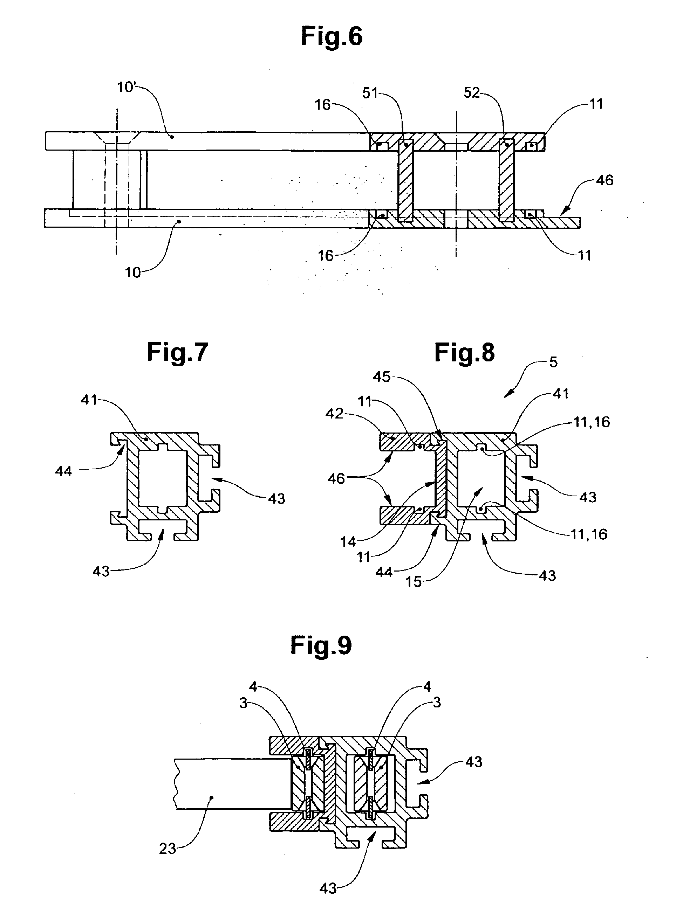

**Figuren 4** und **5** zeigen Ansichten einer Umlenkvorrichtung 1 in einer weiteren bevorzugten Ausführungsform der Erfindung. **Figur 6** zeigt einen entsprechenden Querschnitt. In der **Figur 4** ist die Umlenkvorrichtung 1 zusammengesetzt, wobei eine der Rollen 3 durchsichtig gezeichnet ist, um ein inneres Bahnelement 51 zu zeigen. In der **Figur 5** ist ein oberer Teil des Zentralkörpers 5 entfernt. Der Zentralkörper 5 ist mehrteilig durch einen oberen und einen unteren Bandführungskörper 10, 10' (als "Deckel" und "Boden") gebildet, sowie durch ein gekrümmtes inneres Bahnelement 51 und ein gekrümmtes äusseres Bahnelement 52 und zwei Endelemente 56, welche durch die Bandführungskörper 10, 10' zusammengehalten sind. Die Rollen 3 des Rollenkörpers 2 rollen, sich um den Zentralkörper 5 bewegend, an den beiden Bahnelementen 51, 52 ab und im Übergang zwischen den Bahnelementen 51, 52 an den Endelementen 56. Zwischen den inneren und äusseren Bahnelementen 51, 52 können ferner auch Distanzierungselemente 53 angeordnet sein, welche den Abstand zwischen den Bandführungskörpern 10, 10' definieren. Vorzugsweise weist der Zentralkörper 5 Hohlräume zwischen den genannten Elementen auf und sind die Elemente, aus denen der Zentralkörper 5 zusammengesetzt ist, flexibel, so dass auch der Zentralkörper 5 als ganzes flexibel ist, und insbesondere elastisch beweglich, und insbesondere auch tordierbar.

Zur Montage in einem Wendelförderer 20 werden die flexiblen Umlenkvorrichtungen 1 jeweils in die erforderliche Form gebracht und durch Befestigen an Stütz- oder Rahmenelementen des Wendelförderers 20 in dieser Form fixiert.

**Figuren 7** bis **11** zeigen eine weitere bevorzugte Ausführungsform einer Umlenkvorrichtung 1. Darin ist der Zentralkörper 5 aus zwei miteinander verbundenen Profilen oder Teilprofilen 41, 42 gebildet:
- ein erstes Teilprofil 41 (für sich alleine in **Figur 7** dargestellt), beispielsweise aus Metall, insbesondere Leichtmetall oder einer Leichtmetalllegierung, an welchem eine Rücklauf-Rollenbahn 15 und eine Rücklauf-Bandführung 16 sowie Befestigungsprofile 43 ausgebildet sind; und
- ein zweites Teilprofil 42, beispielsweise aus Kunststoff oder ebenfalls aus Metall, an welchem die vordere Rollenbahn 14 und die Bandführungsnut 11 für den vorderen Bereich der Umlaufbahn der Rollen 3 ausgebildet sind. Eine Fördermittelführung 46 umfängt ein gegen die Rollen 3 stossendes Fördermittel 23 und stützt dieses gleitend ab.

Die beiden Teilprofile 41, 42 sind ineinander geschoben oder eingeschnappt, wodurch ein Verbindungsprofil 44 des ersten Teilprofils 41 mit einem komplementären Verbindungsprofil 45 des zweiten Teilprofiles 42 verhakt oder verzahnt ist **(****Figur 8****).** Die Teilprofile sind vorzugsweise durch ein Strangguss- oder Extrusionsverfahren geformt.

**Figur 9** zeigt einen Querschnitt des Zentralkörpers 5 mit eingesetztem Rollenband 4 mit Rollen 3 sowie mit einem Teil eines Fördermittels 23, das sich in radialer Richtung gegen die Rollen 3 stützt und in vertikaler Richtung durch die Fördermittelführung 46 gestützt ist. Die Rollen 3 wirken also als Wälzkörper zwischen dem Fördermittel 23 und der vorderen Rollenbahn 14. In der Rücklauf-Rollenbahn 15 sind die Rollen 3 relativ lose, mit Spiel geführt. Die lichte Weite der Rücklauf-Rollenbahn 15 ist also grösser als die Rollen 3, jedoch insbesondere in der Höhe nicht derart gross, dass sich die Rollen 3 verkanten und dabei verklemmen können.

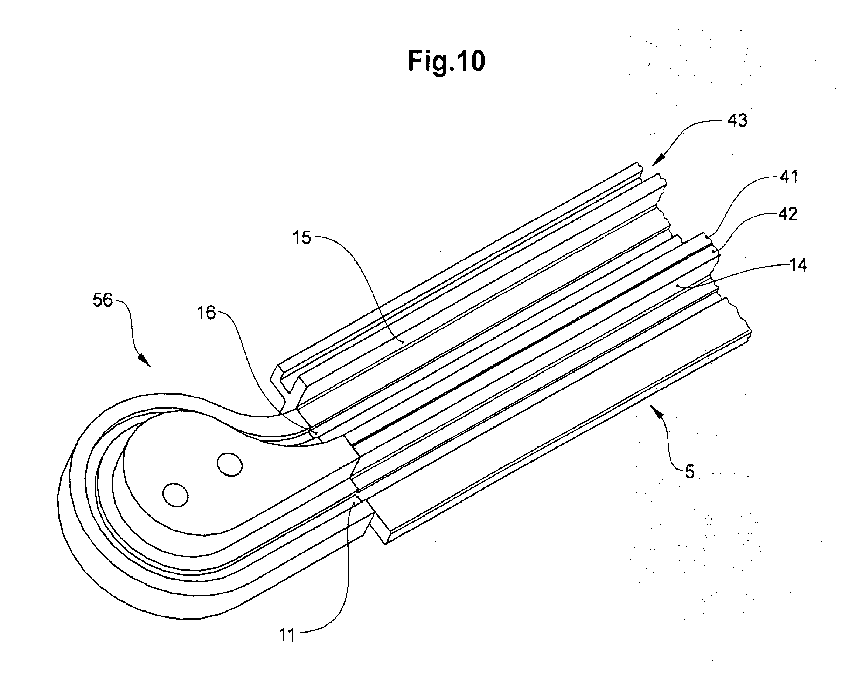

Ein Endelement 56, das selber mehrteilig aufgebaut sein kann, ist jeweils an einem Ende des Zentralkörpers 5 angesetzt und bildet eine Führung der Umlaufbahn von der vorderen Rollenbahn 14 zur Rücklauf-Rollenbahn 15, und ebenfalls eine entsprechende Führung der Bandführungsnut 11. **Figur 10** zeigt einen Abschnitt eines aufgeschnittenen Zentralkörpers 5 und eine Hälfte eines daran angesetzten mehrteiligen Endelementes 56.

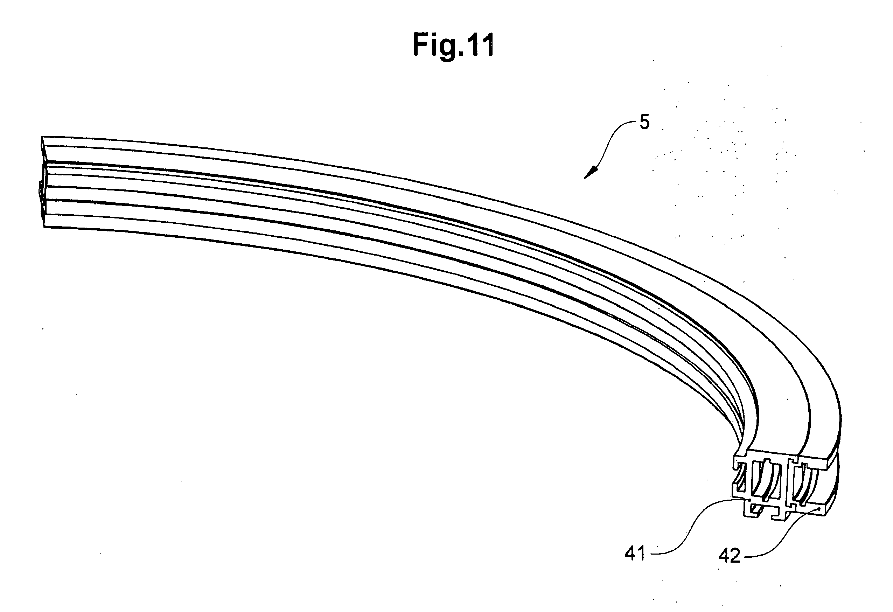

Zur Herstellung einer gebogenen und/oder tordierten Umlenkvorrichtung 1 werden die in gerader Form vorliegenden ersten und zweiten Teilprofile 41, 42 durch Verhaken der Verbindungsprofile ineinander geschoben oder eingeschnappt. Es bleibt eine gewisse Verschiebbarkeit der Verbindungsprofile in Längsrichtung gegeneinander erhalten. Anschliessend werden die derart zu einem Ausgangsprofil verbundenen Teilprofile 41, 42 zusammen in eine gewünschte Form gebracht, d.h. gebogen und/oder tordiert. **Figur 11** zeigt einen derart gebogenes Profil aus zwei Teilprofilen. Dabei können sich die Teilprofile 41, 42 beim Biegen in Längsrichtung in begrenztem Masse gegeneinander verschieben. Vorzugsweise wird bei dieser Verformung mindestens eines der Teilprofile 41, 42 plastisch verformt. Beispielsweise ist dabei eines Teilprofile aus Metall, oder auch beide. Dadurch behält nach dem Verformen auch der Zentralkörper 5 als Ganzes seine neue Form bei. Aufgrund der unterschiedlichen Radien wird nach einem Biegen des Zentralkörpers 5 ein Ablängen des Zentralkörpers 5 erforderlich sein, so dass dieser einen geraden Abschluss aufweist. Anschliessend werden die Endelemente 56 an den beiden Enden des Zentralkörper 5 angesetzt und verbunden. Vorher oder nachher kann der Rollenkörper 2 eingesetzt werden, beispielsweise durch Einfädeln entlang der Bandführungsnut 11 und Verbinden beider Enden des Rollenbandes 4.

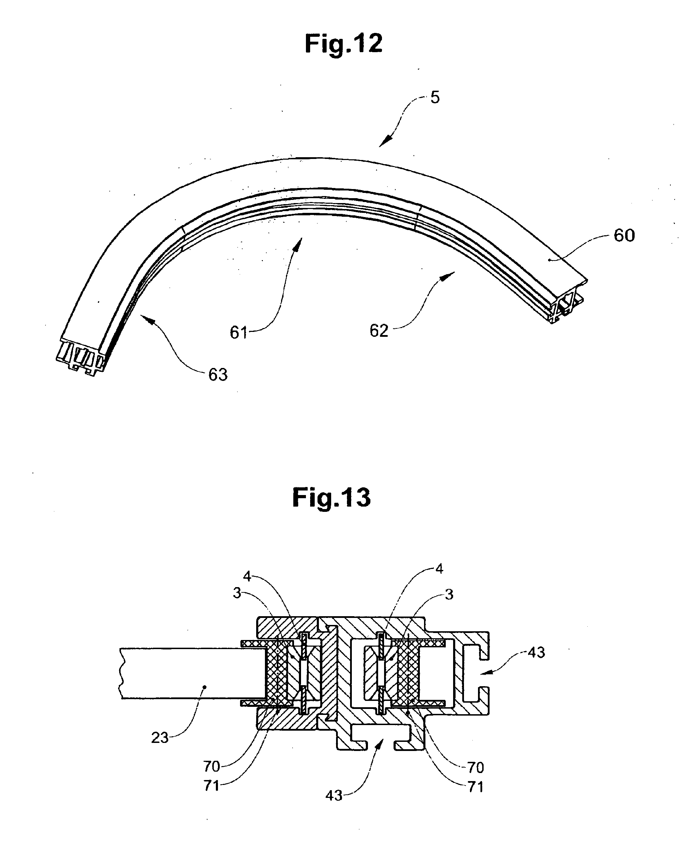

**Figur 12** zeigt einen Zentralkörper 5 mit einem Profil 60 mit variierender Krümmung. Dieses Profil weist also einen ersten Bereich 61 mit konstanter Krümmung auf, und beidseits daran anschliessende Übergangsbereiche 62, 63, die je nach Förderrichtung auch als Einlaufbereich und Auslaufbereich betrachtet werden können. In diesen Übergangsbereichen 62, 63 nimmt die Krümmung, jeweils von aussen her gesehen, stetig von Null her zu, bis die Krümmung des ersten Bereiches erreicht ist. Dadurch ist eine ruckfreie Umlenkung des Fördermittels 23 und damit auch des Fördergutes möglich. Die Form der Übergangsbereiche 62, 63 ist vorzugsweise eine Klothoide.

Der Zentralkörper 5 ist hier zudem beispielhaft aus einem einzigen Profil gebildet. Es sind natürlich solche Profile mit variierender Krümmung auch mit Zentralkörper 5 aus mehreren Teilprofilen herstellbar sind.

**Figur 13** zeigt einen Querschnitt ähnlich jenem der Figur 9, aber zusätzlich mit einem Adaptionselement 70 mit verketteten Elementen, welche ausserhalb des Rollenkörpers 2 ebenfalls um den Zentralkörper 5 umlaufen und dabei, zumindest entlang der vorderen Rollenbahn wo das Fördermittel 23 abgestützt wird, an den Rollen 3 abrollen. Die verketteten Elemente des Adaptionselementes 70 sind beispielsweise um Gelenke mit Achsen 71 gegeneinander drehbar. In einer anderen bevorzugten Ausführungsform der Erfindung ist das Adaptionselement 70 ein flexibles Band. Adaptionselement 70 ist korrespondierend zur Form des Fördermittels 23 im Randbereich des Fördermittels 23 geformt.

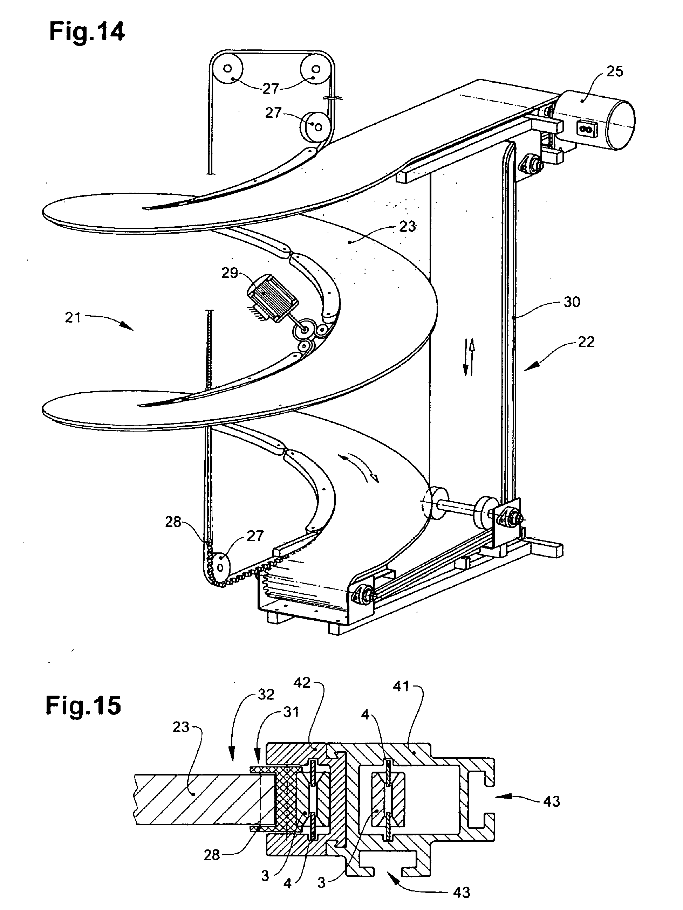

In einer weiteren Ausführungsform weist das Adaptionselement 70 .eine erste Verzahnung 31 auf, in welche eine korrespondierende zweite Verzahnung 32 des Fördermittels 23 eingreift. Dies ist analog Verzahnung des Antriebsbandes 28 der nachfolgend erläuterten **Figur 15**.

Das Adaptionselement 70 wirkt auch als Schutz der Rollen 3 vor Verschmutzung. Es kann auch ein Adaptionselement als reines Schutzmittel eingesetzt werden, und dabei nicht besonders auf die Form des Fördermittels 23 abgestimmt sein.

**Figur 14** zeigt einen Wendelförderer mit einem entlang der Wendel verlaufenden Antriebsband 28 als Adaptionselement. Das Antriebsband 28 verläuft entlang der Innenseite des Fördermittels 23 und überträgt eine Antriebskraft auf das Fördermittel 23. Dies kann durch einen reinen Reibschluss geschehen, indem das Antriebsband 28 flach ist oder in Richtung senkrecht zur Föderrichtung nicht profiliert ist, oder durch einen Formschluss, beispielsweise durch eine Verzahnung, wie in den folgenden beiden Figuren dargestellt. Im Bereich der Wendel, genauer gesagt, in einem Bereich, in welchem das Antriebsband 28 der Schraubenlinie der Wendel folgt, ist das Antriebsband 28 in radialer Richtung durch die Umlenkvorrichtungen 1 gestützt. In Bereichen ausserhalb der Wendel resp der Schraubenlinie der Wendel ist das Antriebsband 28 vorzugsweise mittels Umlenkrollen 27 zurückgeführt, beispielsweise parallel zur Achse der Wendel.

An einer oder an mehreren Stellen kann das Antriebsband 28 durch einen Bandantrieb 29 oder, allgemeiner gesprochen, eine Vorrichtung zur Krafteinleitung angetrieben sein. Dazu kann das Antriebsband 28 an dieser Stelle von der Wendel weggeführt und um ein Antriebsrad der Vorrichtung zur Krafteinleitung geführt sein. Indem das Antriebsband 28 das Antriebsrad umschlingt, ist eine gute Krafteinleitung möglich. Es können, wenn mehrere Vorrichtungen zur Krafteinleitung vorliegen, diese jeweils einzeln durch einen eigenen Motor angetrieben sein, oder mehrere durch einen gemeinsamen Motor über eine Antriebswelle oder-kette.

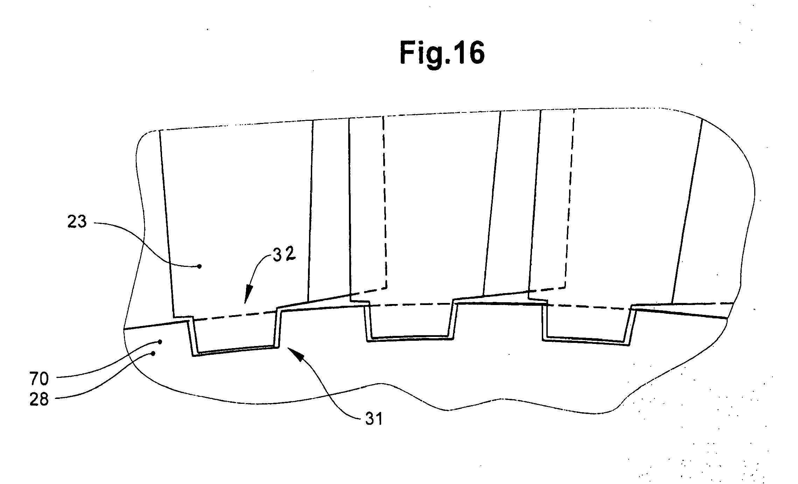

**Figur 15** zeigt einen Querschnitt durch ein Führungsprofil 41, 42 des Förderers der **Figur 14**. **Figur 16** zeigt eine Verzahnung von Antriebsband mit einzelnen Elementen des Fördermittels 23. Wenn eine Verzahnung vorliegt und aufeinanderfolgende Elemente des Fördermittels 23 in die erste Verzahnung 31 eingreifen, wird damit ein Abstand zwischen diesen Elementen bestimmt. Im Bereich der Wendel können Elemente des Fördermittels 23, welche in den geraden Abschnitten parallel zueinander liegen, im Winkel zueinander gedreht, also fächerartig gegeneinander verdreht werden. Der Winkel zwischen den Elementen korrespondiert mit dem Abstand der ersten Verzahnung 31, so dass eine gleichmässige Krafteinleitung, verteilt über den inneren Umfang der Wendel, stattfindet. Zudem verhindert die Verzahnung ein Auffächern der ineinander geschobenen Elemente durch eine Zugkraft, welche auf das Fördermittel 23 wirkt, insbesondere die Zugkraft des Antriebs 25. Jedoch ist in der Regel das Antriebsband 28 in den geraden Bereichen des Fördermittels 23 nicht im Eingriff mit dem Fördermittel 23, weil dort, wegen der anderen Verdrehung der Elemente zueinander, die erste Verzahnung 31 und die zweite Verzahnung 32 nicht miteinander korrespondieren.

Falls eine Verzahnung vorliegt, kann dieselbe erste Verzahnung 31 das Antriebsrad umschlingen und dabei zur Kraftübertragung in eine korrespondierende Verzahnung des Antriebsrades eingreifen. Gemäss einer anderen Ausführungsform liegt eine weitere Verzahnung am Antriebsband 28 vor, welche nicht mit der ersten Verzahnung 31 identisch ist, und greift das Antriebsrad oder greifen mehrere Antriebsräder in diese weitere Verzahnung ein. Beispielsweise ist die weitere Verzahnung an einer oder mehreren weiteren Seiten des Antriebsbandes 28 angeordnet.

Anstelle eines Antriebsrades kann in allen Ausführungsformen ein anders gestaltetes Element zur Krafteineitung in das Antriebsband 28 vorliegen, beispielsweise ein Band oder eine Kette oder eine Nockenkette etc.

Seitliche Wände (in der **Figur 15** ober- und unterhalb des Fördermittels liegend) der erste Verzahnungen 31 können vorliegen und eine Fördermittelführung bilden. Es können auch keine seitlichen Wände vorliegen, so dass die Fördermittel 23 in der Richtung senkrecht zur Fördefläche durch die zweiten Teilprofile 42 geführt sind.

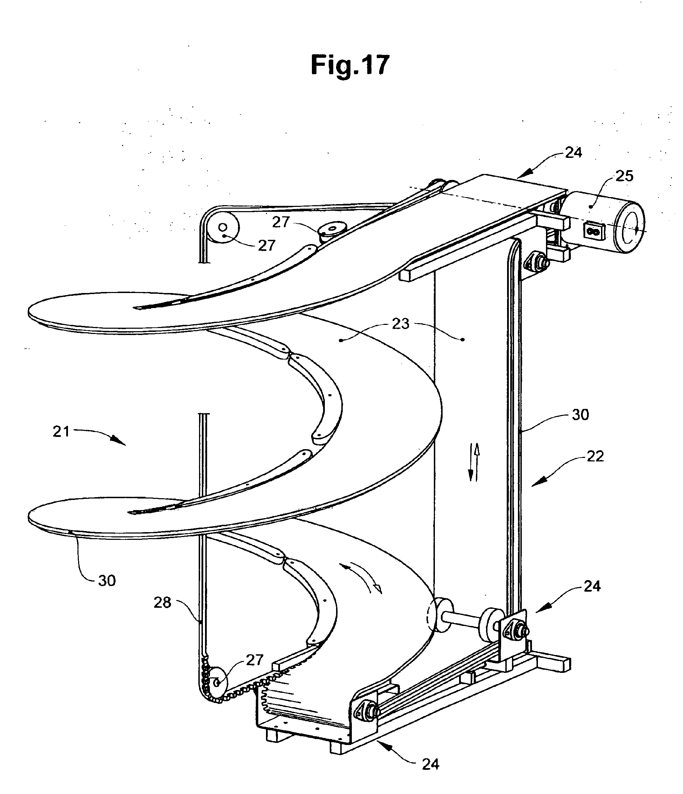

**Figur 17** zeigt eine Variante des Wendelförderers mit Antriebsband 28. Im Gegensatz zur Ausführungsform der Figur 14 ist das Antriebsband 28 nicht (oder nicht nur) durch den Bandantrieb 29 angetrieben, sondern (auch) durch den Antrieb 25 welcher direkt auf das Fördermittel 23 oder die Mattenkette wirkt. Wegen der oben erläuterten Verschiebung der Elemente des Fördermittels 23 wird das Antriebsband 28 in geraden Bereichen zwar im Wesentlichen parallel zum Fördermittel 23 geführt, aber beabstandet und nicht im Eingriff mit diesem. Ein Führungsprofil kann wie in der **Figur 15** ausgebildet sein.

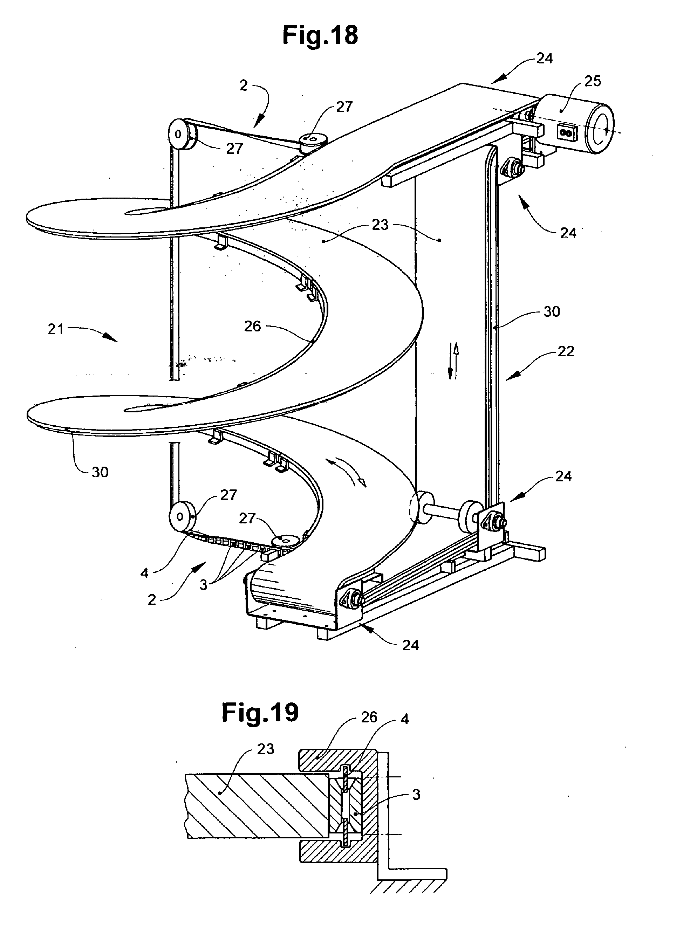

**Figur 18** zeigt einen Wendelförderer mit einem entlang der Wendel verlaufenden Rollenband 4, ohne einzelne Umlenkvorrichtungen. An deren Stelle tritt eine entlang der Innenseite der Wendel verlaufende Führungsschiene 26. Der Rollenkörper 2, durch das Rollenband 4 zusammengehalten, verläuft also entlang der ganzen Wendel oder zuminest eines längeren Abschnittes der Wendel (beispielsweise um 360° oder mehr) an der Innenseite der Wendel und stützt dort rollenderweise die Fördermittel 23 oder das Adaptionselement 70 resp. das Antriebsband 28 in radialer Richtung. Die Rückführung des Rollenkörpers 2 nach Umlauf um die Wendel erfolgt vorzugsweise mittels Umlenkrollen 27, beispielsweise parallel zur Achse der Wendel. Ansonsten hat der Rollenkörper als solcher denselben Aufbau und dieselbe Funktion wie im Zusammenhang mit den Figuren 2 und 3 beschrieben.

**Figur 19** zeigt einen Querschnitt durch eine Führungsschiene 26 desselben. Da die Rückführung nicht entlang der Wendel geschieht, kann ein relativ einfaches C-Profil vorliegen, welches über die ganze Wendel, d.h. entlang der inneren Schraubenlinie der Wendel, oder entlang eines längeren Abschnittes derselben gebogen oder geformt werden kann. Das C-Profil kann mehrteilig sein, indem es entlang seiner Längsrichtung aus mehreren aneinander gereihten Teilprofilen zusammengesetzt sein. Das C-Profil kann auch im Querschnitt aus mehreren Elementen zusammengesetzt sein.

Die Ausführungsformen mit einem entlang der Wendel verlaufenden Rollenkörper 2 können mit den Ausführungsformen mit einem entlang der Wendel verlaufenden Antriebsband 28 kombiniert sein. Das Führungsprofil sieht dabei aus wie in der **Figur 15****,** jedoch ohne das rücklaufende Rollenband 4 auf der rechten Seite; oder, mit anderen Worten, wie in der **Figur 19****,** jedoch zusätzlich mit dem Antriebsband 28 zwischen Rollenband 4 und Fördermittel 23.

In weiteren Ausführungsformen sind Rollenband 4 und/oder Antriebsband 28 jeweils nur abschnittsweise entlang der Wendel geführt, wobei die Wendel mehrerer solcher Abschnitte aufweist. Beispielsweise umfährt ein solcher Abschnitt jeweils 360° oder ein Vielfaches davon und weist jeweils ein Rollenband 4, ein Antriebsband 28 und einen Bandantrieb 29 auf, und sind zwei oder mehr solcher Abschnitte modulartig hintereinander angeordnet.

### BEZUGSZEICHENLISTE

- 1: Umlenkvorrichtung
- 2: Rollenkörper
- 3: Rolle
- 4: Rollenband
- 5: Zentralkörper
- 6: Ausnehmung
- 7: Lagervorsprung
- 8: Einbuchtung
- 9: Spannkörper
- 10, 10': Bandführungskörper
- 11: Bandführungsnut
- 12: Halterung
- 13: Rollenbahn
- 14: vordere Rollenbahn
- 15: Rücklauf-Rollenbahn
- 16: Rücklauf-Bandführung
- 20: Wendelförderer
- 21: Wendelbereich
- 22: Rückführbereich
- 23: Fördermittel, Mattenkette
- 24: vertikale Umlenkungen
- 25: Antrieb
- 26: Führungsschiene
- 27: Umlenkrolle
- 28: Antriebsband
- 29: Bandantrieb
- 30: Gleitschiene
- 31: erste Verzahnung
- 32: zweite Verzahnung
- 41: erstes Teilprofil
- 42: zweites Teilprofil
- 43: Befestigungsprofil
- 44: Verbindungsprofil
- 45: komplementäres Verbindungsprofil
- 46: Fördermittelführung
- 51: inneres Bahnelement
- 52: äusseres Bahnelement
- 53: Distanzierungselement
- 54: Oberkörper
- 55: Unterkörper
- 56: Endelement
- 60: Zentralkörper mit variierender Krümmung
- 61: Bereich konstanter Krümmung
- 62, 63: Übergangsbereich
- 70: Adaptionselement
- 71: Gelenkachse

## Patentansprüche

1. Wendelförderer (20), aufweisend ein entlang eines schraubenartig verlaufenden Wendelbereiches (21) bewegtes Fördermittel (23), wobei das Fördermittel (23) entlang des Wendelbereiches (21) an seiner radial belasteten Seite abgestützt ist, **dadurch gekennzeichnet, dass** diese Abstützung durch mehrere einzelne entlang der radial belasteten Seite des Fördermittels (23) angeordnete Umlenkvorrichtungen (1) realisiert ist, wobei diese Umlenkvorrichtungen (1) jeweils einen Zentralkörper (5) mit einem darum umlaufenden Rollenkörper (2) mit einer Vielzahl von Rollen (3) aufweisen, und die Rollen (3) in einem Winkelsegment eines schraubenartig verlaufenden Stützbereiches auf einer Rollenbahn (13) des Zentralkörpers (5) abrollen.

2. Wendelförderer (20) gemäss einem der vorangehenden Ansprüche, wobei die Umlenkvorrichtung (1) einen tordierten Zentralkörper (5) aufweist.

3. Wendelförderer (20) gemäss einem der vorangehenden Ansprüche, aufweisend ein entlang der Wendel und zwischen Fördermittel (23) und Rollenkörper (2) verlaufendes Antriebsmittel (28), welches eine Antriebskraft auf das Fördermittel (23) überträgt.

4. Wendelförderer (20) gemäss Anspruch 3, wobei das Antriebsmittel (28) eine erste Verzahnung (31) aufweist, welche im Wendelbereich (21) in eine zweite Verzahnung (32) des Fördermittels (23) eingreift und dadurch die Antriebskraft überträgt.

5. Wendelförderer (20) gemäss Anspruch 3 oder 4, wobei das Antriebsmittel (28) an mindestens einer Stelle entlang des Wendelbereichs (21) von einer Vorrichtung zur Krafteinleitung angetrieben ist.

6. Wendelförderer (20) gemäss einem der vorangehenden Ansprüche, wobei eine Umlaufbahn der Rollen (3) um den Zentralkörper (5) geschlossen ist und eine variierende Krümmung aufweist.

7. Wendelförderer (20) gemäss einem der vorangehenden Ansprüche, wobei das Fördermittel (23) ein elastisches Band, eine Mattenkette, Gliederbandkette, Plattenkette oder eine Scharnierbandkette ist.

8. Wendelförderer (20) gemäss einem der vorangehenden Ansprüche, aufweisend eine Mehrzahl von nicht tordierten Umlenkvorrichtungen (1), welche dem Verlauf des Fördermittels (23) schraubenartig folgend nacheinander angeordnet sind.

9. Wendelförderer (20) gemäss einem der vorangehenden Ansprüche, wobei der Zentralkörper (5) elastisch ist, in einer ebenen Form hergestellt ist und in einer tordierten Form im Wendelförderer (20) montiert ist.

10. **Verfahren zur Herstellung eines Wendelförderers** (20) gemäss einem der vorangehenden Ansprüche, aufweisend die folgenden Schritte:
• Herstellen eines Zentralkörpers (5) für eine Umlenkvorrichtung (1) und Einsetzen des Rollenkörpers (2) in den Zentralkörper (5), wobei die Bahn des Rollenkörpers (2) um den Zentralkörper (5) in einer Ebene verläuft,
• Montage der Umlenkvorrichtung (1) als Baueinheit im Wendelförderer (20), wobei die Umlenkvorrichtung (1) beim Einbau in den Wendelförderer (20) der Montage verformt, insbesondere tordiert wird.

11. **Umlenkvorrichtung** (1) zur Verwendung in einem Wendelförderer (20) gemäss einem der Ansprüche 1 bis 10, wobei die Umlenkvorrichtung (1) einen Zentralkörper (5) mit einem um den Zentralkörper (5) umlaufenden Rollenkörper (2) aufweist, und der Rollenkörper (2) eine Vielzahl von Rollen (3) aufweist, welche in einer Rollenbahn (13) des Zentralkörpers (5) um den Zentralkörper (5) abrollen,
**dadurch gekennzeichnet, dass** der Zentralkörper (5) durch plastische Verformung einer Profilstange (41) geformt ist.

12. Umlenkvorrichtung (1) gemäss Anspruch 11, wobei der Zentralkörper (5) unter plastischer Verformung mindestens einer Profilstange (41) aus Metall geformt ist.

13. Umlenkvorrichtung (1) gemäss Anspruch 11 oder 12, wobei der Zentralkörper (5) oder ein Teil des Zentralkörper (5), welcher ein inneres und ein äusseres Bahnelement (51, 52) aufweist, entlang welchen die Rollen (3) geführt sind, in einer geraden Form hergestellt ist, und durch plastische Verformung in eine gebogene und/oder eine tordierte Form gebracht ist.

14. Umlenkvorrichtung (1) gemäss einem der Ansprüche 11 bis 13, wobei der Zentralkörper (5) im verformten Zustand mindestens zwei Teilprofile (41, 42) aufweist, und entlang seiner Längsrichtung einen im Wesentlichen gleich bleibenden Profilquerschnitt aufweist.

15. Umlenkvorrichtung (1) gemäss einem der Ansprüche 11 bis 14, aufweisend einen ersten Bereich (61) mit konstanter Krümmung und beidseits an diesen anschliessende Übergangsbereiche (62, 63), wobei jeweils von den Enden der Umlenkvorrichtung (1) her gesehen die Krümmung der Umlenkvorrichtung (1) in den Übergangsbereichen (62, 63) stetig von Null aus bis zur Krümmung des ersten Bereiches (61) hin zunimmt.

16. Umlenkvorrichtung (1) gemäss einem der Ansprüche 11 bis 15, aufweisend ein ausserhalb des Rollenkörpers (2) um den Zentralkörper (5) umlaufendes Schutzmittel (70), welches im Bereich einer vorderen Rollenbahn (14), wo das Fördermittel (23) abgestützt wird, zwischen dem Fördermittel (23) und den Rollen (3) verläuft.

17. Umlenkvorrichtung (1) gemäss Anspruch 16, wobei das Schutzmittel (70) als Adaptionselement ausgebildet ist und dazu im Bereich, in welchem es an das Fördermittel (23) angrenzt, korrespondierend zur Form des Fördermittels (23) geformt ist.

18. **Verfahren** zur Herstellung einer Umlenkvorrichtung (1) gemäss einem der Ansprüche 11 bis 17, aufweisend die folgenden Schritte:
• Herstellen eines Ausgangsprofiles, welches entlang seiner Längsrichtung einen im Wesentlichen gleich bleibenden Profilquerschnitt aufweist;
• plastisches Verformen des Ausgangsprofiles in eine gebogene und/oder tordierte Form;
• Einsetzen der Rollen (3) und Montage von Endelementen (56) zur Führung der Rollen (3).

19. Verfahren gemäss Anspruch 18, wobei das Herstellen des Ausgangsprofiles durch Verbinden von mindestens zwei Teilprofilen mit oder ohne weitere Teile als Verbindungsmittel geschieht.

## Claims

1. A spiral conveyor (20), comprising a conveying means (23) moved along a helically extending spiral region (21), wherein the conveying means (23) is supported on its radially loaded side along the spiral region (21), **characterized in that** said support is realized by several individual deflecting devices (1) arranged along the radially loaded side of the conveying means (23), wherein said deflecting devices (1) each comprise a central body (5) with a roller body (2) circulating around said central body (5) with a plurality of rollers (3), and the rollers (3) roll along a roller track (13) of the central body (5) in an angular segment of a helically extending support region.

2. The spiral conveyor (20) as claimed in one of the preceding claims, wherein the deflecting device (1) comprises a twisted central body (5).

3. The spiral conveyor (20) as claimed in one of the preceding claims, comprising a drive means (28), which extends along the spiral and between the conveying means (23) and the roller body (2) and which transmits a driving force to the conveying means (23).

4. The spiral conveyor (20) as claimed in claim 3, wherein the drive means (28) comprises a first toothing (31), which engages into a second toothing (32) of the conveying means (23) in the spiral region (21) and, as a result, transmits the driving force.

5. The spiral conveyor (20) as claimed in claim 3 or 4, wherein the drive means (28) is driven by a device for introducing force at at least one position along the spiral region (21).

6. The spiral conveyor (20) as claimed in one of the preceding claims, wherein a circular path of the rollers (3) about the central body (5) is closed and comprises a varying curvature.

7. The spiral conveyor (20) as claimed in one of the preceding claims, wherein the conveying means (23) is an elastic band, a flush-grid chain, link chain, plate chain or a flat-top chain.

8. The spiral conveyor (20) as claimed in one of the preceding claims, comprising a plurality of non-twisted deflecting devices (1), which are arranged one after the other following the course of the conveying means (23) in a helical manner.

9. The spiral conveyor (20) as claimed in one of the preceding claims, wherein the central body (5) is elastic, is produced in a planar form and is mounted in the spiral conveyor (20) in a twisted form.

10. A method for producing a spiral conveyor (20) as claimed in any one of the preceding claims, said method comprising the following steps:
■ producing a central body (5) for a deflecting device (1) and inserting the roller body (2) into the central body (5), wherein the track of the roller body (2) around the central body (5) lies in a plane,
■ assembling the deflecting device (1) as a structural unit in the spiral conveyor (20), wherein the deflecting device (1), as it is being installed into the spiral conveyor (20) of the assembly, is deformed, in particular twisted.

11. A deflecting device (1) for use in a spiral conveyor (20) as claimed in one of claims 1 to 10, wherein the deflecting device (1) comprises a central body (5) with a roller body (2) circulating around the central body (5), and the roller body (2) comprises a plurality of rollers (3), which roll around the central body (5) on a roller track (13) of the central body (5), **characterized in that** the central body (5) is formed by plastic deformation of a profiled rod (41).

12. The deflecting device (1) as claimed in claim 11, wherein the central body (5) is formed by plastic deformation of at least one profiled rod (41) of metal.

13. The deflecting device (1) as claimed in claim 11 or 12, wherein the central body (5) or part of the central body (5), which comprises an inner and an outer track element (51, 52) along which the rollers (3) are guided, is produced in a straight form, and is brought into a curved and/or a twisted form by means of plastic deformation.

14. The deflecting device (1) as claimed in one of claims 11 to 13, wherein the central body (5) comprises at least two part profiles (41, 42) in the deformed state, and comprises a profile cross section that remains substantially the same along its longitudinal direction.

15. The deflecting device (1) as claimed in one of claims 11 to 14, comprising a first region (61) with a constant curvature and transition regions (62, 63), which connect to said first region on both sides, wherein in each case, when seen from the ends of the deflecting device (1), the curvature of the deflecting device (1) in the transition regions (62, 63) increases constantly from zero as far as up to the curvature of the first region (61).

16. The deflecting device (1) as claimed in one of claims 11 to 15, comprising a protecting means (70), which circulates around the central body (5) outside of the roller body (2) and which, in the region of a front roller track (14), where the conveying means (23) is supported, extends between the conveying means (23) and the rollers (3).

17. The deflecting device (1) as claimed in claim 16, wherein the protecting means (70) is realized as an adapting element and for this purpose, in the region in which it abuts against the conveying means (23), is formed corresponding to the form of the conveying means (23).

18. A method for producing a deflecting device (1) as claimed in one of claims 11 to 17, said method comprising the following steps:
■ producing an initial profile, which comprises a profile cross section that remains substantially the same along its longitudinal direction;
■ plastic deforming of the initial profile into a curved and/or twisted form;
■ inserting the rollers (3) and assembling end elements (56) for guiding the rollers (3).

19. The method as claimed in claim 18, wherein the producing of the initial profile occurs by connecting at least two part profiles with or without further parts as connecting means.

## Revendications

1. Transporteur hélicoïdal (20) comprenant un moyen de transport (23) déplacé le long d'une partie hélicoïdale (21) qui s'étend en hélice, côté chargé radialement du moyen de transport (23) étant soutenu sur la partie hélicoïdale (21),
**caractérisé en ce que**
ce soutien est réalisé par plusieurs dispositifs de renvoi (1) disposés séparément le long du côté chargé radialement du moyen de transport (23),
**en ce que** ces dispositifs de renvoi (1) présentent chacun un corps central (5) entouré par un corps de roulement (2) doté de plusieurs galets (3) et
**en ce que** les galets (3) roulent sur une piste de roulement (13) du corps central (5) dans un segment angulaire d'une partie de soutien qui s'étend en hélice.

2. Transporteur hélicoïdal (20) selon la revendication précédente, dans lequel le dispositif de renvoi (1) présente un corps central (5) torsadé.

3. Transporteur hélicoïdal (20) selon l'une des revendications précédentes, présentant un moyen d'entraînement (28) qui s'étend le long de l'hélice et entre le moyen de transport (23) et le corps de roulement (2) et qui transfère une force d'entraînement sur le moyen de transport (23).

4. Transporteur hélicoïdal (20) selon la revendication 3, dans lequel le moyen d'entraînement (28) présente une première denture (31) qui s'engage dans la partie hélicoïdale (21) sur une deuxième denture (32) du moyen de transport (23) et qui transfère ainsi la force d'entraînement.

5. Transporteur hélicoïdal (20) selon les revendications 3 ou 4, dans lequel le moyen d'entraînement (28) est entraîné en au moins un emplacement de la partie hélicoïdale (21) par un dispositif d'introduction de force.

6. Transporteur hélicoïdal (20) selon l'une des revendications précédentes, dans lequel la piste périphérique des galets (3) autour du corps central (5) est fermée et présente une courbure variable.

7. Transporteur hélicoïdal (20) selon l'une des revendications précédentes, dans lequel le moyen de transport (23) est un ruban élastique, une chaîne à tapis, une chaîne à rubans, une chaîne à plaques ou une chaîne à rubans à charnière.

8. Transporteur hélicoïdal (20) selon l'une des revendications précédentes, présentant plusieurs dispositifs de renvoi (1) non torsadés qui sont disposés les uns à la suite des autres en suivant en hélice l'évolution du moyen de transport (23).

9. Transporteur hélicoïdal (20) selon l'une des revendications précédentes, dans lequel le corps central (5) est élastique, est réalisé sous une forme plane et est monté sous forme torsadée dans le transporteur hélicoïdal (20).

10. Procédé de fabrication d'un transporteur hélicoïdal (20) selon l'une des revendications précédentes, le procédé comprenant les étapes suivantes :
formation d'un corps central (5) pour un dispositif de renvoi (1) et insertion du corps de roulement (2) dans le corps central (5), la piste du corps de roulement (2) s'étendant dans un plan autour du corps central (5), et
montage du dispositif de renvoi (1) sous la forme d'un composant dans le transporteur hélicoïdal (20), le dispositif de renvoi (1) étant déformé et en particulier torsadé lors de son incorporation au cours du montage dans le transporteur hélicoïdal (20).

11. Dispositif de renvoi (1) destiné à être utilisé dans un transporteur hélicoïdal (20) selon l'une des revendications 1 à 10, le dispositif de renvoi (1) présentant un corps central (5) doté d'un corps de roulement (2) qui entoure le corps central (5), le corps de roulement (2) présentant plusieurs galets (3) qui roulent autour du corps central (5) dans une piste de roulement (13) du corps central (5),
**caractérisé en ce que**
le corps central (5) est façonné par déformation plastique d'une barre profilée (41).

12. Dispositif de renvoi (1) selon la revendication 11, dans lequel le corps central (5) est réalisé en métal par déformation plastique d'au moins une barre profilée (41).

13. Dispositif de renvoi (1) selon les revendications 11 ou 12, dans lequel le corps central (5) ou une partie du corps central (5) qui présente un élément intérieur de piste et un élément extérieur de piste (51, 52) le long desquels les galets (3) sont guidés est réalisé sous forme rectiligne et est amené sous forme cintrée et/ou sous forme torsadée par déformation plastique.

14. Dispositif de renvoi (1) selon l'une des revendications 11 à 13, dans lequel le corps central (5) présente à l'état déformé au moins deux parties de profil (41, 42) et présente un profil de section transversale essentiellement constante dans le sens de sa longueur.

15. Dispositif de renvoi (1) selon l'une des revendications 11 à 14, présentant une première partie (61) de courbure constante et des parties de transition (62, 63) adjacentes à chacun des côtés de cette première partie, la courbure du dispositif de renvoi (1) augmentant dans les parties de transition (62, 63) de manière constante de zéro à la courbure de la première partie (61) depuis les extrémités du dispositif de renvoi (1).

16. Dispositif de renvoi (1) selon l'une des revendications 11 à 15, présentant un moyen de protection (70) qui entoure le corps central (5) à l'extérieur du corps de roulement (2) et qui s'étend entre le moyen de transport (23) et les galets (3) au niveau d'une piste de roulement avant (14), là où le moyen de transport (23) est soutenu.

17. Dispositif de renvoi (1) selon la revendication 16, dans lequel le moyen de protection (70) est configuré comme élément d'adaptation et est dans ce but façonné sous une forme qui correspond à la forme du moyen de transport (23) dans la partie dans laquelle il est adjacent au moyen de transport (23).

18. Procédé de fabrication d'un dispositif de renvoi (1) selon l'une des revendications 11 à 17, le procédé présentant les étapes suivantes :
formation d'un profil initial qui présente une section transversale essentiellement constante dans le sens de sa longueur,
déformation plastique du profil initial en une forme cintrée et/ou torsadée et
insertion des galets (3) et montage d'éléments d'extrémité (56) permettant de guider les galets (3).

19. Procédé selon la revendication 18, dans lequel la réalisation du profil initial reliant au moins deux profils partiels présente ou non d'autres parties servant de moyen de liaison.
